(19) Europäisches Patentamt
European Patent Office
Office européen des brevets

(11) **EP 1 552 909 A1**

(12) **EUROPEAN PATENT APPLICATION**
published in accordance with Art. 158(3) EPC

(43) Date of publication:
**13.07.2005 Bulletin 2005/28**

(51) Int Cl.⁷: **B25J 5/00**

(21) Application number: **03736033.6**

(22) Date of filing: **04.06.2003**

(86) International application number:
**PCT/JP2003/007089**

(87) International publication number:
**WO 2003/106112 (24.12.2003 Gazette 2003/52)**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **12.06.2002 JP 2002172109**

(71) Applicant: **Japan Science and Technology Agency Kawaguchi-shi, Saitama 332-0012 (JP)**

(72) Inventors:
• **FURUTA, Takayuki Setagaya-ku, Tokyo 156-0057 (JP)**

• **TAWARA, Tetsuo Bunkyo-ku, Tokyo 113-0021 (JP)**
• **OKUMURA, Yu Fujisawa-shi, Kanagawa 251-0028 (JP)**
• **KITANO, Hiroaki Kawagoe-shi, Saitama 350-0035 (JP)**
• **SHIMIZU, Masaharu Shinjuku-ku, Tokyo 160-0022 (JP)**

(74) Representative: **Röhl, Wolf Horst, Dipl.-Phys., Dr. Rethelstrasse 123 40237 Düsseldorf (DE)**

(54) **WALKING TYPE MOVING DEVICE AND WALKING CONTROL DEVICE THEREFOR AND WALKING CONTROL METHOD**

(57) A walk controller (30) to drive-control drive means of respective joint portions (15L, 15R to 20L, 20R) of respective leg portions (13L, 13R) based on gait data comprises force sensors (23L, 23R) to detect forces applied to the soles of respective foot portions(14L, 14R), and a compensation part (32) to adjust the gait data from a gait forming part (24) based on horizontal floor reaction force among the forces detected by the force sensors, respective force sensor parts (23L, 23R) comprises 3-axis force sensors (36a to 36d) provided to respective parts of soles divided into a plurality at respective foot portions (14L, 14R), a contact detection part (32b) detects a contact of foot sides by the force sensors provided to regions next to end edges of respective soles, and the compensation part (32) adjusts the gait data from the gait forming part (24) referring to the contact of foot sides, and thereby the contact of foot sides to such a matter as an obstacle is detected, and a walk stability is realized.

FIG. 2

EP 1 552 909 A1

**Description**

Technical Field

The present invention relates to a walking mobile system, and more specifically to its walk control which can detect contact of foot sides.

Background Art

A conventional biped walking robot is so designed as to form a pre-determined walk pattern (hereinafter to be called gait) data, control walk according to said gait data, and move leg portions by pre-determined walk patterns, thereby to realize biped walking.

However, for such biped walking robots, walking posture tends to be unstable due to, for example, road surface condition, or the errors of physical parameters of robots themselves and other factors, and even to fall down in some cases. On the other hand, if walk control is conducted while recognizing the robot's walking state at real time without pre-determining gait data, it may be possible to stabilize walking posture, but, even in such cases, if unpredicted road surface conditions or the like are encountered, the walking posture goes unbalanced, and the robot falls down.

For this reason, what is called ZMP Compensation is necessary, whereby the points on the sole of a foot of the robot at each of which the composite momentum of floor reaction force and gravity becomes zero are converged to the target value by walk control. As such controlling method for ZMP compensation, such methods are known as that to accelerate and adjust the upper body of a robot by utilizing compliance control and converging ZMP to the target value, and that to adjust the landing position of the robot's foot, as disclosed in, for example, JP 5-305583 A.

Here, stabilization of a robot is targeted by ZMP regulation in such control methods, and in such ZMP regulation it is the premise to measure horizontal floor reaction force. For this reason, a conventional biped walking robot is provided with a force sensor at a foot sole, and measures therewith horizontal floor reaction force at a foot sole.

However, for the biped walking robot of such constitution, the force sensor provided at a foot sole merely measures horizontal floor reaction force as was explained above, and if a foot side hits an obstacle while a foot portion is moved, for example, during walking motion of a biped walking robot, said robot can not recognize the contact of the foot side to such an obstacle, tries to continue walking, and thereby falls down in some cases.

Disclosure of the Invention

It is the object of the present invention, taking into consideration the above-mentioned problems, to provide a walking mobile system, its walk controller, and walk control method therefor to realize walk stability by detecting the contact of foot sides to matters of obstacles and the like.

The above-mentioned objective is achieved in accordance with the first aspect of the present invention with the walking mobile system, which comprises a main body having at both sides of its lower part a pair of leg portions attached thereto so as to be each pivotally movable biaxially, each of the leg portions having a knee portion in its midway and a foot portion at its lower end, the foot portions being attached to their corresponding leg portions so as to be pivotally movable biaxially, drive means for pivotally moving leg, knee, and foot portions, respectively, a gait forming part to form gait data including target angle path, target angle velocity, and target angle acceleration corresponding to a required motion, and a walk controller for drive-controlling the drive means in accordance with the gait data, characterized by the walk controller comprising force sensors for sensing forces applied to each sole of foot portions, and a compensation part for adjusting the gait data from the gait forming part based on horizontal floor reaction force among the forces detected by the force sensors, and the force sensors are provided in the plurality of divided regions of soles of respective foot portions, and the force sensors provided in the regions next to end edges of respective soles detect a contact of respective foot sides, the compensation part adjust the gait data from the gait forming part with reference to said contact of foot sides.

The force sensor is preferably a 3-axis force sensor, and, in the regions next to the end edges of respective soles, at least a part of outer edges of soles as the detecting part of a corresponding force sensor forms a circular arc with said force sensor as its center.

A walking mobile system in accordance with the present invention is preferably such that said force senor is a 3-axis force sensor, and the compensation part is provided with a hexaxial force computing part to compute forces of hexaxial direction based on detected signals from respective force sensors, and a contact detection part to detect the contact of foot sides by decomposition of force components. The contact detection part preferably judges if the detected signals from respective force sensors are by the force from a floor surface, or generated from the contact to a matter on the floor surface, and outputs the flag information to the compensation part which force sensor detected the contact of a foot side.

The above-mentioned objective is also achieved in accordance with the second aspect of the present invention with the walk controller for the walking mobile system, which comprises a main body having at both sides of its lower part a pair of leg portions attached thereto so as to be each pivotally movable biaxially, each of the leg portions having a knee portion in its midway and a foot portion at its lower end, the foot portions being attached to their corresponding leg portions so as to be pivotally movable biaxially, drive means for pivotally moving leg, knee, and foot portions, respectively, and drive-controls the drive means in accordance with gait data including target angle path, target angle velocity, and target angle acceleration corresponding to a required motion, as well as comprises a force sensor to detect forces applied to a sole of each foot portion, and a compensation part to adjust the gait data from a gait forming part based on horizontal floor reaction force among the forces detected by the force sensor, characterized in that, the force sensors are provided to regions, respectively, divided into a plurality at the soles of respective foot portions, the force sensors provided to the regions next to end edges of respective soles detect a contact of foot sides, and the compensation part adjusts the gait data from the gait forming part, referring to the contact of foot sides.

The force sensor is preferably a 3-axis force sensor, and, in the regions next to the end edges of respective soles, at least a part of outer edges of soles as the detecting part of a corresponding force sensor forms a circular arc with said force sensor as its center.

A walk controller for the walking mobile system in accordance with the present invention is preferably such that said force senor is a 3-axis force sensor, and the compensation part is provided with a hexaxial force computing part to compute forces of hexaxial direction based on detected signals from respective force sensors, and a contact detection part to detect the contact of foot sides by decomposition of force components. The contact detection part preferably judges if the detected signals from respective force sensors are by the force from a floor surface, or generated from the contact to a matter on the floor surface, and outputs the flag information to the compensation part which force sensor detected the contact of a foot side.

Further, the above-mentioned objective is achieved in accordance with the third aspect of the present invention with the walk control method for the walking mobile system, which comprises a main body having at both sides of its lower part a pair of leg portions attached thereto so as to be each pivotally movable biaxially, each of the leg portions having a knee portion in its midway and a foot portion at its lower end, the foot portions being attached to their corresponding leg portions so as to be pivotally movable biaxially, drive means for pivotally moving leg, knee, and foot portions, respectively, a gait forming part to form gait data including target angle path, target angle velocity, and target angle acceleration, corresponding to a required motion, and a walk controller to drive-control said drive means in accordance with said gait data, as well as detects the forces applied to a sole of each foot portion by force sensors, and adjusts the gait data from the gait forming part by a compensation part based on horizontal floor reaction force among the forces detected by the force sensor, characterized by including a first step to detect the forces by respective force sensors in the plurality of divided regions of soles of foot portions, a second step to detect a contact of respective foot sides by detected signals from the force sensors provided in the regions next to end edges of respective soles, and a third step in which the compensation part adjusts the gait data from the gait forming part with reference to said contact of foot sides.

The force sensor is preferably a 3-axis force sensor, and, in the regions next to the end edges of respective soles, at least a part of outer edges of soles as the detecting part of a corresponding force sensor forms a circular arc with said force sensor as its center. A walk control method for the walking mobile system in accordance with the present invention is preferably such that said force senor is a 3-axis force sensor, and the compensation part is provided with a hexaxial force computing part to compute forces of hexaxial direction based on detected signals from respective force sensors, and a contact detection part to detect the contact of foot sides by decomposition of force components. The contact detection part preferably judges if the detected signals from respective force sensors are by the force from a floor surface, or generated from the contact to a matter on the floor surface, and outputs the flag information to the compensation part which force sensor detected the contact of a foot side.

According to the above-described aspect, based upon the horizontal floor reaction force detected by the force sensors provided in the plurality of the respective divided regions of soles of foot portions, the drive means is drive-controlled by adjusting the gait data from the gait forming part by the compensation part. In this case, the compensation part adjusts the gait data with reference to the contact of foot sides detected by the force sensors provided in the region next to the end edges of respective foot soles among the force sensors. Therefore, if a foot side contacts a matter during a robot's walking motion of respective foot portion, the contact of the foot side is detected by the force sensors, the gait data is adjusted based on the horizontal floor reaction force generated from the friction force of the sole with a floor surface, referring to the contact of the foot side, and a stability of a main body, preferably the robot's upper body is attempted. Thus, if a robot's respective foot portions hit, for example, an obstacle on the floor surface or a step or others, the contact of a foot side is detected and adjusted by the force sensors, thereby the robot's stability is maintained, and walk control is assured without falling down.

In case that the force sensors provided in said respective divided parts are 3-axis force sensors, and at least a part of the outer edge of a sole as the detecting part of the corresponding force sensor forms a circular arc face with said force sensor as the center, since the distance between the contact point and the force sensor is always equal upon the contact of a matter to the part of said circular arc face of the outer edge of these regions, the calculation of the contact force based on the detected signal from the force sensor can be simplified, and the detection time can be shortened. Also, in case that said compensation part is provided with a hexaxial force computing part to compute the forces in hexaxial direction based on the detected signal from respective force sensors, and the contact detection part to detect the contact of a foot side by decomposition of force components, the hexaxial directional force can be computed by at least two 3-axis force sensors by the hexaxial force computing part, each dividing part can detect the force in the hexaxial direction like a hexaxial force sensor by having cheap 3-axis force sensors, respectively, and hence the cost can be reduced. Also, by judging which force sensor detects the contact of a foot side based on the makeup of the force sensor by decomposition of force components by the contact detection part, the contact of a foot side can be detected.

In case that the contact detection part judges if the detected signals from respective force sensors are by the force from the floor surface, or by the contact to a matter on the floor surface, and outputs the flag information to the compensation part which force sensor detected the contact of a foot side, the compensation part can adjust the gait data from the gait forming part, referring to which force sensor detected the contact of a foot side based on the flag information.

Brief Description of the Drawings

The present invention will better be understood from the following detailed description and the drawings attached hereto showing certain illustrative forms of embodiment of the present invention. In this connection, it should be noted that such forms of embodiment illustrated in the accompanying drawings hereof are intended in no way to limit the present invention but to facilitate an explanation and an understanding thereof, in which drawings:

Fig.1 is a schematic view illustrating a mechanical makeup of a biped walking robot according to the present invention.
Fig.2 is a block diagram illustrating a electrical makeup of the biped walking robot shown in Fig.1.
Fig.3 is a block diagram illustrating a compensation part in a walk controller of the biped walking robot shown in Fig.1.
Fig.4 is a schematic view illustrating a makeup of a force sensors provided at a soles of respective foot portions of the biped walking robot shown in Fig.1, where (A) is a plan view, and (B) is a cross-sectional view.
Fig.5 (A) - (C) are graphs, respectively, showing locations of each triaxial force sensor shown in Fig.4, and origin of force measurement.
Fig.6 is a flowchart showing a walk control motion of the biped walking robot shown in Fig.1.
Fig.7 is a flowchart showing a contact detecting motion of the biped walking robot shown in Fig.1.
Fig.8 (A) - (C) are schematic views, respectively, showing the states of contact detection of a foot side by force sensors of the biped walking robot shown in Fig.1.
Fig.9 (A) and (B) are plan views showing the examples of distortion of force sensors shown in Fig.4.

Best Modes for Carrying out the Invention

Hereinafter, the present invention will be described in detail with reference to suitable forms of embodiment thereof illustrated in the figures.

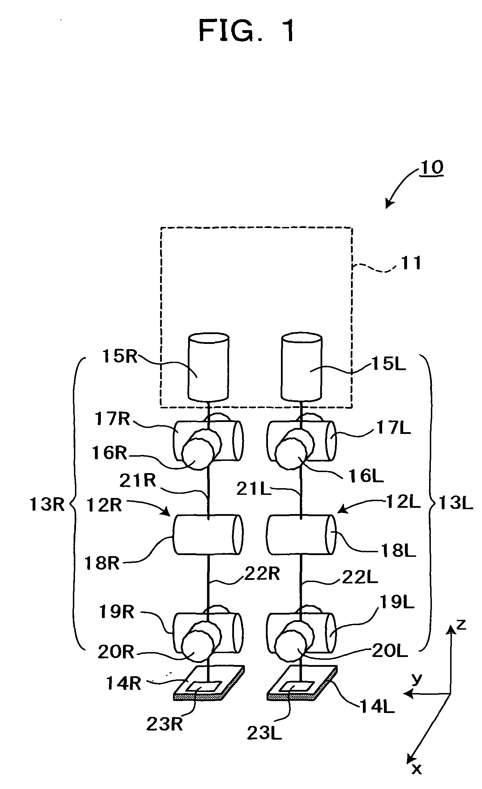

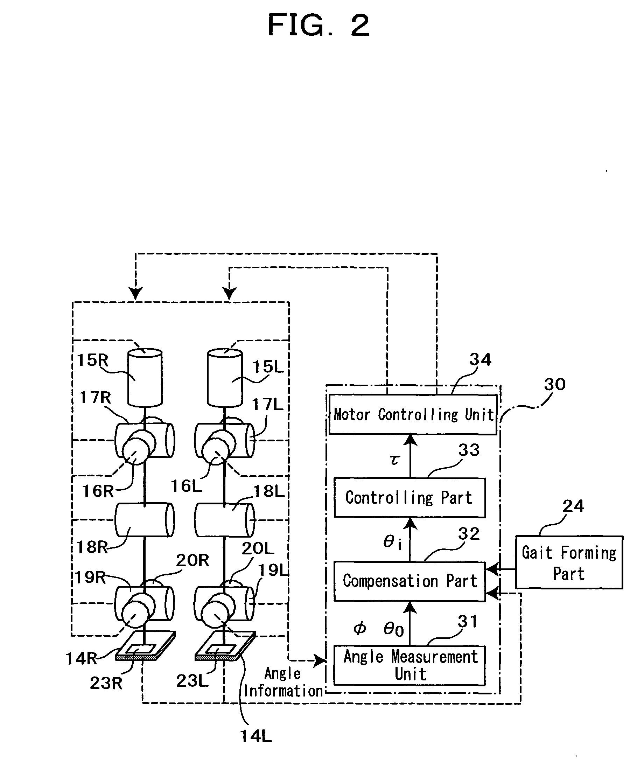

Fig.1 and Fig.2 show the makeup of an embodiment of a biped walking robot with a biped walking mobile system applied thereto in accordance with the present invention. Referring to Fig.1, a biped walking robot 10 includes an upper body 11 which is a main body having at both sides of its lower part a pair of leg portions 13L and 13R attached thereto, each of the leg portions having a knee portion 12L, 12R in its midway, and a foot portion 14L, 14R at its lower end.
Here, each of said leg portions 13L, 13R has six joint portions, namely in the order from above, the joint portions 15L, 15R for the leg portion rotation of a waist (around z axis) with respect to the upper body 11, the joint portions 16L, 16R for the roll direction of a waist (around x axis), the joint portions 17L, 17R for the pitch direction of a waist (around y axis), the joint portions 18L, 18R for the pitch direction of the knee portion 12L, 12R, the joint portions 19L, 19R for the pitch direction of an ankle portion with respect to the foot portion 14L, 14R, and the joint portions 20L, 20R for the roll direction of the ankle portion. Further, each joint portion 15L, 15R to 20L, 20R is constituted with a joint driving motor.
Thus, a waist joint comprises said joint portions 15L, 15R, 16L, 16R, 17L, and 17R, and a foot joint comprises joint portions 19L, 19R, 20L, and 20R. Further between a waist and a knee joints, they are connected with the thigh links 21L, 21R, and between a knee and a foot joints, they are connected with the lower thigh links 22L, 22R. Thus, the leg portions 13L, 13R and the foot portions 14L, 14R at both sides, left and right, of the biped walking robot 10 have six degrees of freedom, respectively, and it is so made up to be capable of walking at will in a three dimensional space by drive-controlling these twelve joint portions during walk with respective drive motors at appropriate angles, and by giving desired motions to whole leg portions 13L, 13R, and foot portions 14L, 14R.

Further, said foot portions 14L, 14R are provided with force sensor parts 23L, 23R at the soles (bottom surfaces). The force sensor parts 23L, 23R detect, as described later, force at respective foot portions 14L, 14R, the horizontal floor reaction force in particular. Here, said upper body 11 is illustrated like a mere box, but actually it may be provided with a head portion or two hands.

Fig.2 illustrates the electrical makeup of the biped walking robot 10 shown in Fig.1. In Fig.2, the biped walking robot 10 is provided with a gait forming part 24 to form gait data corresponding to the targeted motion, and a walk controller 30 to drive-control a drive means, namely the above-mentioned respective joint portions, that is, the joint driving motors 15L, 15R, to 20L, 20R based on the gait data. Here, xyz coordinate system is used as that for the biped walking robot 10 with x direction as anteroposterior direction (forward as +), with y direction as horizontal direction (inner direction as +), and with z direction as vertical direction (upward direction as +). The gait forming part 24 forms the gait data, responding to the targeted motion input from the outside, including target angle path, target angle velocity, and target angle acceleration of respective joint portions 15L, 15R, to 20L, 20R required for the biped walking robot 10 to walk. The walk controller 30 comprises an angle measurement unit 31, a compensation part 32, a controlling part 33, and a motor controlling unit 34.

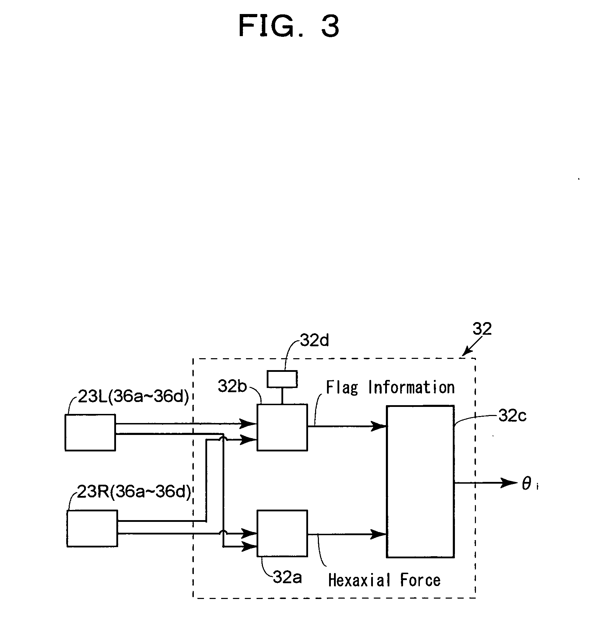

The angle measurement unit 31 is to measure the angular positions of respective joint drive motors, that is, the state vector $\phi$ about angle and angle velocity, and outputs to the compensation part 32, by inputting the angular information of respective joint drive motors from, for example, a rotary encoder or the like provided to the joint drive motors of respective joint portions 15L, 15R to 20L, 20R. The compensation part 32, as shown in Fig.3, is provided with a hexaxial force computing part 32a, a contact detection part 32b, and a main compensation unit 32c. The hexaxial force computing part 32a outputs the hexaxial force (Fx, Fy, Fz, Tx, Ty, and Tz) to the main compensation unit 32c based on the detected output from force sensor parts 23L, 23R. The contact detection part 32b also decomposes the force components based on the detected output from the force sensor parts 23L, 23R, judges if each detected output from each force sensor part 23L, 23R is by the force from the floor surface, or by the contact to a matter on the floor surface, and, referring to the sensor makeup information recorded in advance in a sensor makeup information part 32d, judges which force sensor 36a, 36b, 36c, or 36d (mentioned later) of respective force sensor part 23L, 23R detected the contact of a foot side, and then outputs the flag information of said force sensor to the main compensation unit 32c. In this occasion, the contact detection part 32b outputs the output signals {Swx(0), Swy(0), Swz(0); Swx(1), Swy(1), Swz(1); ⋯}, and outputs the flag information of respective force sensors by setting the flag of the output signal from a force sensor which detected the contact of a foot side, as, for example, from 0 to 1.

Thus, the main compensation unit 32c computes a horizontal floor reaction force F based on the hexaxial force from the hexaxial force computing part 32a, and further adjusts the gait data from the gait forming part 24 based on the horizontal floor reaction force F and a state vector $\phi$ from the angle measurement unit 31, referring to the flag information from the contact detection part 32b, and outputs the vector $\theta i$ (i = 1 to n, where n is the degree of freedom about the walk of a robot 10) to the controlling part 33.

The controlling part 33 forms control signals of respective joint drive motors, that is, torque vectors $\tau$ based on the vector ($\theta i - \theta 0$), by subtracting the angular vector $\theta 0$ at a robot's respective joint portions from the vector $\theta i$ which is the gait data corrected by the compensation part 32. Further, the motor controlling unit 34 drive-controls respective joint drive motors according to the control signals (the torque vectors $\tau$) from the controlling part 33.

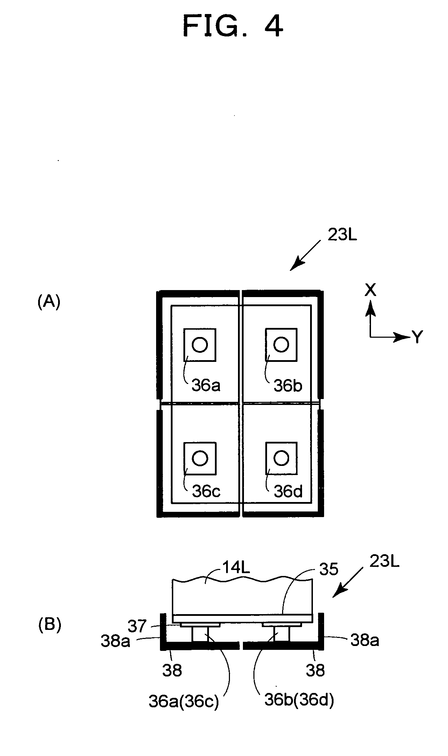

Here explanation is made, referring to Fig.4, of the force sensor 23L, for the force sensor parts 23L, 23R are constituted symmetrically with respect to the left and right. The force sensor part 23L comprises four force sensors 36a, 36b, 36c, and 36d, made up by horizontally divided, namely, two divisions in x direction and two divisions in y direction at the bottom of the sole plate 35 which is the bottom face of a foot portion 14L. Since each of the force sensors 36a, 36b, 36c, and 36d is of identical structure, explanation is made below of the force sensor 36a. The force sensor 36a is a 3-axis force sensor provided between a sole 37 above and a sole 38 below, and detects the force received by the lower sole 38.

Here, the lower sole 38 is supported pivotally movably to the front and behind, the left and right, with a sensor axis of the force sensor 36a as the center, and is so designed as to be capable of landing in all directions by pivoting, and is provided with a side wall 38a rising upward at a part next to the outer edge, namely, a foot side of a foot portion 14L. Therefore, when a foot portion 14L hits a side of a matter on the floor surface, the side wall 38a of the lower sole 38 collides on said matter, transmits its impact strength to the force sensor 36a, which can hence detect said contact. Here, force sensor parts 23L and 23R are divided, respectively, into four force sensors 36a to 36d, but not limited as such, they may be divided at least into four at both sides of heel portions 14L, 14R, and both sides of toe portions of foot portions, and furthermore, may be divided into five or more. Also, each of the force sensors 36a to 36d is located in line at a sole, as illustrated in a figure, but not limited as such, may be located arbitrarily.

Here, in general, if four or more force sensors are arranged on a same plane, it is geometrically impossible for each to detect force with all force sensors in landing state, thereby those more than four are regarded as meaningless excess. But in this case, since each divided part is divided from each other, all the force sensors 36a to 36d are capable of landing on the floor, and of detecting forces without force sensors in meaningless excess. Therefore, since the forces from the landing on to the floor surface by foot portions 14L, 14R are dispersed and applied to each force sensor 36a to 36d, a small and light-weighted one can be used, thereby cost for each force sensor 36a to 36d can be reduced. Also, since the force applied to each force sensor 36a to 36d becomes small, its resolution is improved. Therefore, an A/D converter of relatively low quality and low cost can be used for A/D conversion of the signals from each force sensor 36a to 36d in order to obtain the same resolution, thereby the cost for an A/D converter can be reduced.

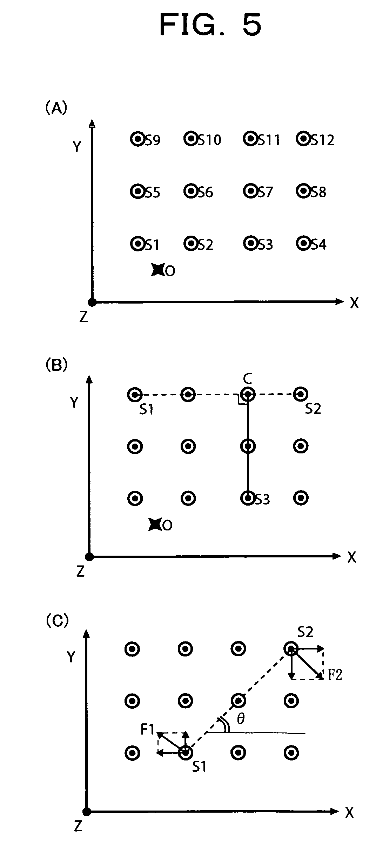

Here, the above-mentioned force sensors 36a to 36d are 3-axis force sensors, and with two or more 3-axis force sensors, the hexaxial directional force can be computed. Hereinafter, explanation is made, referring to Fig.5, of computation of hexaxial directional force from 3-axis force sensors of n in number in general. In Fig.5, 3-axis force sensors of n in number S1, S2, S3, ---, Sn are arranged at a sole with respect to the origin O (Ox, Oy) of force measurement. In this connection, the origin O of force measurement preferably better agrees, for example, to the drive coordinate system of a foot joint.

Here, if the position of each 3-axis force sensor Si is assumed as Si = (X(i), Y(i)), then the forces of hexaxial direction are given, respectively, as the equations below. That is, the forces of respective directions Fx, Fy, Fz are given as

$$F_X = \sum_{i=1}^{n} f_{X(i)} \qquad (1),$$

$$F_Y = \sum_{i=1}^{n} f_{Y(i)} \qquad (2),$$

$$F_Z = \sum_{i=1}^{n} f_{Z(i)} \qquad (3),$$

and the torques of respective directions Tx, Ty, Tz are given as

$$T_X = \sum_{i=1}^{n} f_{Z(i)} \cdot \left( Y(i) - O_Y \right) \qquad (4),$$

$$T_Y = \sum_{i=1}^{n} f_{Z(i)} \cdot \left( X(i) - O_X \right) \qquad (5),$$

$$T_Z = \sum_{i=1}^{n} f_{Y(i)} \cdot \cos\alpha + f_{X(i)} \cdot \sin\alpha \sqrt{\left( X(i) - O_X \right)^2 + \left( Y(i) - O_Y \right)^2} \qquad (6),$$

where α in Equation (6) is given as

$$\alpha = a\tan\left( \frac{X(i) - O_X}{Y(i) - O_Y} \right) \qquad (7).$$

Thus, computation is conducted by the hexaxial force computing part 32a provided in the compensation part 32 based on the detected output from each of 3-axis force sensors 36a to 36d, and the forces in hexaxial direction are detected. Further from the forces in hexaxial direction, the horizontal floor reaction force F is expressed as the force in horizontal direction generated from the friction between the floor surface and a robot 10's sole, namely, a resultant force of Fx in X direction and Fy in Y direction, and its vector Fc and its magnitude |Fc| are expressed as

$$F_C = \begin{bmatrix} F_X \\ F_Y \end{bmatrix} \quad , \quad |\mathrm{F}_C| = \sqrt{F_X^2 + F_Y^2} \qquad (8).$$

Here, each of the 3-axis force sensors 36a to 36d has data dispersion in respective detected output, as well as the detected output varies by the environmental temperature and the secular distortion and others. Therefore, the detected output from each of the 3-axis force sensors 36a to 36d is automatically calibrated in the compensation part 32 by, for example, auto-calibration.

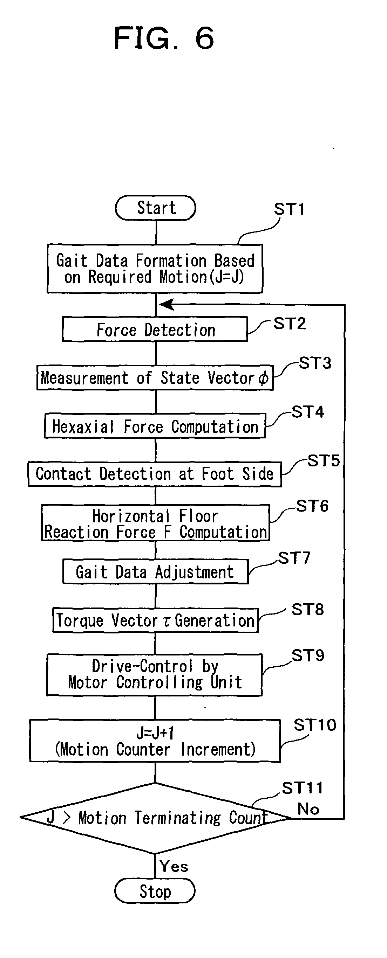

The biped walking robot 10 in accordance with the embodiment of the present invention is constituted as described above, and its walking motion is conducted by the flowchart shown in Fig.6 as described below. In Fig.6 at step ST1, the gait forming part 24 forms gait data based on the input required motion (J = J), and outputs to the compensation part 32 of the walk controller 30. And at step ST2, the force sensor 23L, 23R provided to both foot portions 14L, 14R detect forces respectively, and output to the hexaxial force computing part 32a and the contact detection part 32b of the compensation part 32. And at step ST3, the angle measurement unit 31 measures the state vector φ of respective joint portions 15L, 15R to 20L, 20R, and outputs to the compensation part 32.

At step ST4, the hexaxial force computing part 32a computes hexaxial force based on the detected output from respective force sensors 36a to 36d of force sensor parts 23L, 23R, and outputs to the main compensation unit 32c. And at step ST5, the contact detection part 32b, as described below based on the detected output from respective force sensors 36a to 36d of force sensor parts 23L, 23R, judges which of the force sensors 36a to 36d detects the contact of a foot side, and outputs the flag information of said force sensors 36a to 36d to the main compensation unit 32c. Following these steps at step ST6, the main compensation unit 32c of the compensation part 32 computes horizontal floor reaction force F based on the hexaxial force from the hexaxial force computing part 32a.

At step ST7, the main compensation unit 32c of the compensation part 32 adjusts the gait data, while referring to the flag information from the contact detection part 32b, based on said horizontal floor reaction force F and the state vector φ of respective joint portions 15L, 15R to 20L, 20R from the angle measurement unit 31, and outputs the vector θi to the controlling part 33. Here, the compensation part 32 may adjust the gait data by applying hexaxial force to the known ZMP compensation function. As for said known ZMP compensation function, the international patent application (International Publication Number WO02/100606 A1) laid open on December 19, 2002 by the present applicant, for example, may be referred to. Here, it is needless to mention that, not limited to said ZMP compensation function, the gait data may be adjusted by applying hexaxial force to the conventional compensation function.

Next, at step ST8, the controlling part 33 subtracts an angle vector θ0 at respective joint portions from the vector θi, generates, based on the vector (θi - θ0), the control signals for respective joint drive motors, namely, torque vectors τ, and outputs to the motor control unit 34. And at step ST9, the motor control unit 34 drive-controls the joint drive motors of respective joint portions based on the torque vectors τ. Thus, the biped walking robot 10 conducts walk motions corresponding to the required motions.

At step ST10 after that, the controlling part 33 sets J=J+1 by motion counter increment, and waits for the pre-determined sampling time, and at step ST11, if said J is smaller than the pre-determined motion terminating count, the above-described motion is repeated by returning to step 2 again. And at step ST11, if said J exceeds the motion terminating count, the motion is stopped.

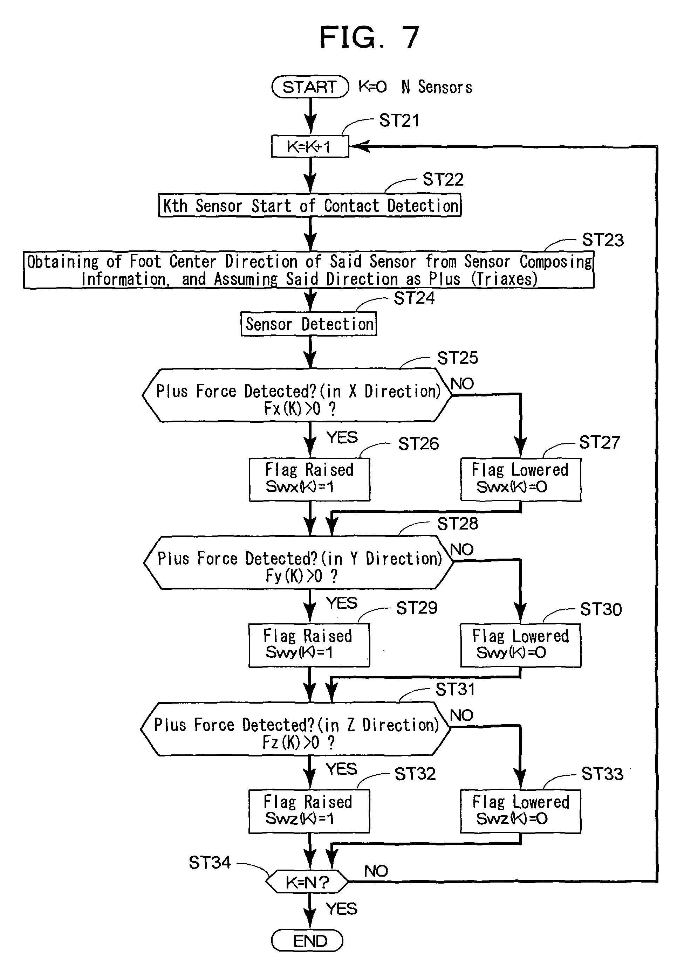

Here, the detection of the contact of a foot side by the contact detection part 32b at step ST5 described above is conducted as shown in the flowchart of Fig.7. In Fig.7, the contact detection part 32b sets K=K+1 at step ST21 from the initial condition K=0, and at step ST22, initiates the contact detection operation of the Kth force sensors 36a to 36d (the individual force sensors 36a to 36d of respective force sensor parts 23L, 23R are numbered in advance.). In the figure, explanation is made of the case where the sensors of N in number are used, but here the case is explained where N=8, that is, K=1 to 8.

At step ST23, the direction of a foot center of the force sensor is obtained from the sensor composing information recorded in advance in the sensor composing information part 32d, and said direction is assumed as plus with respect to a three-axis. Next at step ST24, the force sensors 36a to 36d detect force, and at step ST25, the contact detection part 32b judges if the plus force is detected with respect to X direction (Fx(K)>0?), and, at stepST26, if it is the plus force, a flag is raised about said force sensor (Swx(K)=1 assumed), whereas if not the plus force, a flag is lowered about said force sensor (Swx(K)=0 assumed) at step ST27.

At step ST28, the contact detection part 32b judges if the plus force is detected with respect to Y direction (Fy(K)>0?), and, at stepST29, if it is the plus force, a flag is raised about said force sensor (Swy(K)=1 assumed), whereas if not the plus force, a flag is lowered about said force sensor (Swy(K)=0 assumed) at step ST30.

At step ST31 after that, the contact detection part 32b judges if the plus force is detected with respect to Z direction (Fz(K)>0?), and, at stepST32, if it is the plus force, a flag is raised about said force sensor (Swz(K)=1 assumed), whereas if not the plus force, a flag is lowered about said force sensor (Swz(K)=0 assumed) at step ST33.

Finally at step ST34, the contact detection part 32b outputs said respective flag information to the main compensation unit 32c, while conducting judgment of K=8?, and if K≠8, it returns to stepST21, and the motions, with K=K+1, from ST22 to ST34 are repeated. If K=8, the operation of contact detection is terminated.

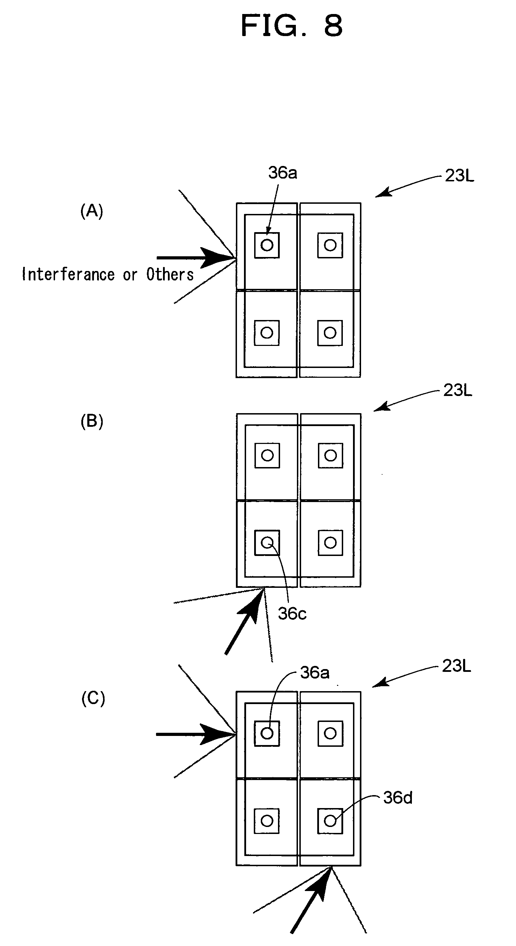

Thus, with respect to the foot portion 14L, if contact force comes from left-side as shown in Fig.8(A), or it comes obliquely from the lower side as shown in Fig.8(B), or further if it comes in the plurality of directions from left-side and obliquely from the lower side as shown in Fig.(C), the force sensors 36a and/or 36d are acting as touch sensors, respectively, thereby the contact detection is conducted by the contact detection part 32b.

In this case in the biped walking robot 10 upon drive-control of respective joint drive motors, the gait data is adjusted, referring to the flag information showing the contact of a foot side by the contact detection part 32b, based on the horizontal floor reaction force F from the force sensor parts 23L, 23R provided to the soles of respective foot portions 14L, 14R in the main compensation unit 32c of the compensation part 32, and vector θi is generated, whereby the stability of the robot 10 is realized with said horizontal floor reaction force F as the reference model. Since, even if respective foot portions 14L, 14R of the robot 10 hit, for example, an obstacle or a step or the like on the floor surface, the force sensor parts 23L, 23R provided to soles can detect the contact of foot sides, it would not continue walking motion as it has been doing, and fall down in some cases as in the prior cases, and it is possible to assuredly conduct walking motion according to the required motion.

The biped walking robot 10 in accordance with this embodiment, by adjusting the gait data, based on the horizontal floor reaction force F computed from the detected signals from the force sensors 23L, 23R provided to the soles of respective foot portions 14L, 14R, namely, from the 3-axis force sensors 36a to 36d provided to the soles divided into plurality, and further referring to the detection of contact of foot sides by the contact detection part 32b, can conduct walk control with the horizontal floor reaction force F generated from the friction between a sole and the floor surface as the reference model. Furthermore, since the force sensor parts 23L, 23R can be utilized as touch sensors about side faces, thereby contact of a foot side can be detected, the makeup is simplified, and the cost lowered, and the robot 10's walk stability can be realized even with an obstacle or a step on the floor surface.

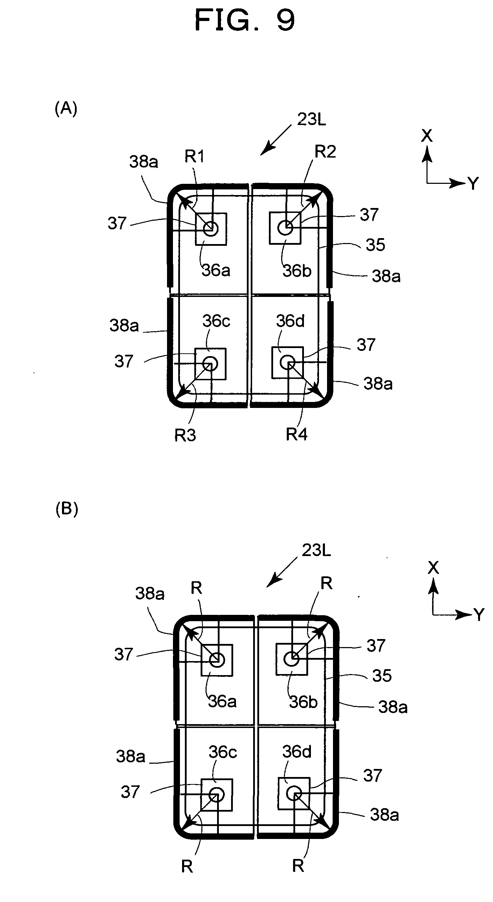

According to the above-mentioned embodiment, the force sensor parts 23L, 23R have, as shown in Fig.4, the side wall 38a of the lower sole 38 of respective force sensors 36a to 36d having an outer shape of rectangle as a whole, but not limited as such as shown in Fig.9(A), at least a part of the side wall 38a of the lower sole 38 as a detecting part, the corner parts in case of illustration in the figure may be formed as circular arc planes with the radii R1, R2, R3, and R4 with respective force sensors 36a, 36b, 36c, and 36d as centers. In accordance with such makeup, in case that the part of a side wall 38a formed as a circular arc plane contacts a matter such as an obstacle, a step, or the like on the floor surface, upon computation of the contact force by the corresponding force sensors 36a to 36d, the distances to the force sensors 36a to 36d from these parts are always equal, thereby the computation is simplified, and the detection time shortened. Further as shown in Fig.9(B), in case that at least a part of respective side walls 38a is formed as a circular arc plane with the mutually same radius R with respective force sensors 36a to 36d as centers, the parameters of the computation equations in respective force sensors 36a to 36d become equal, and the computation is still more simplified, and the detection time more shortened.

While in the foregoing description of embodiment explanation is made of application of the present invention to a biped walking robot, it is obvious that the present invention is applicable to any biped walking mobile system which is capable of biped walking, as well as having other various machines supported on two legs, or further to walking robots or walking mobile systems supported on a plurality of leg portions and capable of walking.

Industrial Applicability

According to the present invention as described above, if each of foot portions hits, for example, an obstacle, a step, or the like on the floor surface during a robot's walking motion, the robot's stability can be maintained by detecting the contact of foot sides, and adjusting the gait data, and hence the walk control can be assuredly conducted without falling down, thereby an extremely superb biped walking mobile system, its walk controller, and the method of walk control are provided.

**Claims**

**1.** A walking mobile system comprising:

a main body having at both sides of its lower part a plurality of leg portions attached thereto so as to be each pivotally movable biaxially, each of the leg portions having a knee portion in its midway and a foot portion at its lower end, the foot portions being attached to their corresponding leg portions so as to be pivotally movable biaxially, drive means for pivotally moving respective leg, knee, and foot portions, a gait forming part for forming gait data including target angle path, target angle velocity, and target angle acceleration corresponding to a required motion, and a walk controller for drive-controlling the drive means based on the gait data, **characterized in that**,

the walk controller comprises force sensors for detecting forces applied to soles of respective foot portions, and a compensation part for adjusting the gait data from the gait forming part based on horizontal floor reaction force among the forces detected by the force sensors,

the force sensors are provided to regions, respectively, divided into a plurality at the soles of respective foot portions,

the force sensors provided to the regions next to end edges of respective soles detect a contact of foot sides, and

the compensation part adjusts the gait data from the gait forming part, referring to the contact of foot sides.

2. A walking mobile system as set forth in Claim 1, wherein the force sensor is a 3-axis force sensor, and at least a part of a outer edge of the sole as a detection part of the corresponding force sensor, in the region next to the end edges of the respective soles, forms a circular arc plane with the force sensor as the center.

3. A walking mobile system as set forth in Claim 1 or 2, wherein the force sensor is a 3-axis force sensor, and the compensation part comprises a hexaxial force computing part for computing forces in the hexaxial direction based on detected signals from respective force sensors, and a contact detection part for detecting the contact of a foot side by a decomposition of force components.

4. A walking mobile system as set forth in Claim 2 or 3, wherein the contact detection part judges if the detected signals from respective force sensors are forces from a floor surface, or by the contact to a matter on the floor surface, and outputs flag information as to which force sensor detected the contact of a foot side to the compensation part.

5. A walk controller for a walking mobile system comprising a main body having at both sides of its lower part a plurality of leg portions attached thereto so as to be each pivotally movable biaxially, each of the leg portions having a knee portion in its midway and a foot portion at its lower end, the foot portions being attached to their corresponding leg portions so as to be pivotally movable biaxially, and drive means for pivotally moving respective leg, knee, and foot portions,

the walk controller drive-controls the drive means in accordance with gait data including target angle path, target angle velocity, and target angle acceleration formed from a gait forming part corresponding to a required motion, as well as comprises force sensors to detect forces applied to a sole of each foot portion, and a compensation part to adjust the gait data from the gait forming part based on horizontal floor reaction force among the forces detected by the force sensor, **characterized in that**,

the force sensors are provided to regions, respectively, divided into a plurality at the soles of respective foot portions,

the force sensors provided to the regions next to end edges of respective soles detect a contact of foot sides, and

the compensation part adjusts the gait data from the gait forming part, referring to the contact of foot sides.

6. A walk controller for a walking mobile system as set forth in Claim 5, wherein the force sensor is a 3-axis force sensor, and at least a part of a outer edge of the sole as a detection part of the corresponding force sensor, in the region next to the end edges of the respective soles, forms a circular arc plane with the force sensor as the center.

7. A walk controller for a walking mobile system as set forth in Claim 5 or 6, wherein the force sensor is a 3-axis force sensor, and the compensation part comprises a hexaxial force computing part for computing forces in the hexaxial direction based on detected signals from respective force sensors, and a contact detection part for detecting the contact of a foot side by a decomposition of force components.

8. A walk controller for a walking mobile system as set forth in Claim 7, wherein the contact detection part judges if the detected signals from respective force sensors are forces from a floor surface, or by the contact to a matter on the floor surface, and outputs flag information as to which force sensor detected the contact of a foot side to the compensation part.

9. A walk control method for a walking mobile system comprising a main body having at both sides of its lower part a plurality of leg portions attached thereto so as to be each pivotally movable biaxially, each of the leg portions having a knee portion in its midway and a foot portion at its lower end, the foot portions being attached to their corresponding leg portions so as to be pivotally movable biaxially, drive means for pivotally moving respective leg, knee, and foot portions,

the walk control method including drive-controlling the drive means based on gait data including target angle path, target angle velocity, and target angle acceleration formed from a gait forming part corresponding to a required motion, as well as detecting forces applied to a sole of each foot portion, and also adjusting the gait data from the gait forming part by a compensation part based on horizontal floor reaction force among forces detected by force sensors, **characterized in that** it includes,

a first step to detect the forces by respective force sensors in regions divided into a plurality at the soles of respective foot portions,

a second step to detect a contact of respective foot sides by detected signals from the force sensors provided to the regions next to end edges of respective soles, and

a third step to adjust the gait data from the gait forming part by the compensation part, referring to the contact of foot sides.

10. A walk control method for a walking mobile system as set forth in Claim 9, wherein the force sensor is a 3-axis force sensor, and at least a part of a outer edge of the sole as a detection part of the corresponding force sensor, in the region next to the end edges of the respective soles, forms a circular arc plane with the force sensor as the center.

11. A walk control method for a walking mobile system as set forth in Claim 9 or 10, wherein the force sensor is a 3-axis force sensor, and the compensation part comprises a hexaxial force computing part for computing forces in the hexaxial direction based on detected signals from respective force sensors, and a contact detection part for detecting the contact of a foot side by a decomposition of force components.

12. A walk control method for a walking mobile system as set forth in Claim 10 or 11, wherein the contact detection part judges if the detected signals from respective force sensors are forces from a floor surface, or by the contact to a matter on the floor surface, and outputs flag information as to which force sensor detected the contact of a foot side to the compensation part.

# FIG. 1

# FIG. 2

# FIG. 3

# FIG. 4

(A)

(B)

# FIG. 5

(A)

(B)

(C)

# FIG. 6

Start — ST1

Gait Data Formation Based on Required Motion(J=J)

Force Detection — ST2

Measurement of State Vector φ — ST3

Hexaxial Force Computation — ST4

Contact Detection at Foot Side — ST5

Horizontal Floor Reaction Force F Computation — ST6

Gait Data Adjustment — ST7

Torque Vector τ Generation — ST8

Drive-Control by Motor Controlling Unit — ST9

J=J+1 (Motion Counter Increment) — ST10

J > Motion Terminating Count — ST11 No

Yes

Stop

# FIG. 7

START ) K=0  N Sensors

ST21

K=K+1

ST22

Kth Sensor Start of Contact Detection

ST23

Obtaining of Foot Center Direction of Said Sensor from Sensor Composing Information, and Assuming Said Direction as Plus (Triaxes)

ST24

Sensor Detection

ST25

Plus Force Detected?(in X Direction) $Fx(K) > 0$ ?

NO

YES ST26

Flag Raised $Swx(K)=1$

ST27

Flag Lowered $Swx(K)=0$

ST28

Plus Force Detected?(in Y Direction) $Fy(K) > 0$ ?

NO

YES ST29

Flag Raised $Swy(K)=1$

ST30

Flag Lowered $Swy(K)=0$

ST31

Plus Force Detected?(in Z Direction) $Fz(K) > 0$ ?

NO

YES ST32

Flag Raised $Swz(K)=1$

ST33

Flag Lowered $Swz(K)=0$

ST34

K=N?

NO

YES

END

# FIG. 8

(A)

36a

23L

Interferance or Others

(B)

23L

36c

(C)

36a

23L

36d

# FIG. 9

(A)

(B)

## INTERNATIONAL SEARCH REPORT

| | International application No. |
|---|---|
| | PCT/JP03/07089 |

| A. CLASSIFICATION OF SUBJECT MATTER |
|---|
| Int.Cl⁷ B25J5/00 |

According to International Patent Classification (IPC) or to both national classification and IPC

| B. FIELDS SEARCHED |
|---|
| Minimum documentation searched (classification system followed by classification symbols) |
| Int.Cl⁷ B25J5/00 |

Documentation searched other than minimum documentation to the extent that such documents are included in the fields searched
Jitsuyo Shinan Koho          1922–1996   Toroku Jitsuyo Shinan Koho     1994–2003
Kokai Jitsuyo Shinan Koho     1971–1998

Electronic data base consulted during the international search (name of data base and, where practicable, search terms used)

| C. DOCUMENTS CONSIDERED TO BE RELEVANT | | |
|---|---|---|
| Category* | Citation of document, with indication, where appropriate, of the relevant passages | Relevant to claim No. |
| A | EP 0433091 A2  (HONDA GIKEN KOGYO KABUSHIKI KAISHA), 14 December, 1990 (14.12.90), Full text & JP 3-184781 A | 1–12 |
| A | JP 6-79657 A  (HONDA GIKEN KOGYO KABUSHIKI KAISHA), 22 March, 1994 (22.03.94), Full text (Family: none) | 1–12 |

☐ Further documents are listed in the continuation of Box C.     ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 12 September, 2003 (12.09.03) | 30 September, 2003 (30.09.03) |

| Name and mailing address of the ISA/ | Authorized officer |
|---|---|
| Japanese Patent Office | |
| Facsimile No. | Telephone No. |

Form PCT/ISA/210 (second sheet) (July 1998)